(19) Europäisches Patentamt
European Patent Office
Office européen des brevets

(11) EP 2 317 631 A1

(12) EUROPEAN PATENT APPLICATION

(43) Date of publication:
04.05.2011 Bulletin 2011/18

(51) Int Cl.:
H02K 11/02 (2006.01)

(21) Application number: 09174955.6

(22) Date of filing: 03.11.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicant: Electrolux Home Products Corporation
N.V.
1130 Brussels (BE)

(72) Inventor: Maguolo, Costantino
33080, Porcia (PN) (IT)

(74) Representative: Nardoni, Andrea et al
Electrolux Italia S.p.A.
Corso Lino Zanussi, 30
33080 Porcia (PN) (IT)

(54) **Electric household appliance with an electronic device for controlling a universal electric motor**

(57)    An electric household appliance (20) having a universal electric motor (25); and an electronic control device (15) for regulating the rotor current ($I_{RDT}$) and stator current ($I_{STAT2}$) to be supplied to the rotor winding and stator winding. The electronic control device (15) has a filtering stage (18) having an inductor (35) and a capacitor (36); and a chopper regulating stage (17) which is connectable by the filtering stage (18) to a supply source, and is designed to chopper-regulate the rotor current ($I_{ROT}$) and stator current ($I_{STAT2}$) as a function of the required rotor rotation speed ($\omega_{ROT}$). The inductor (35) of the filtering stage (18) including a first stator winding portion (26a).

Fig. 3

## Description

The present invention relates to an electric household appliance, such as a washing-machine, dishwasher or drier, featuring a universal electric motor, and an electronic motor control device of chopper control circuit architecture.

It should be pointed out that, herein, the term "universal electric motor" is intended to mean a single-phase electric commutator motor having a rotor, and a wound-wire stator that can be supplied with both direct and alternating current.

More specifically, the "universal electric motor" comprises a stator fitted with a field winding hereinafter referred to as the "stator winding"; a rotor comprising a drum mounted to rotate inside the stator and supporting an armature winding hereinafter referred to as the "rotor winding"; a commutator of conducting material fitted to the drum and connected electrically to the rotor winding; and at least two brushes that slide on the commutator to supply current to the rotor winding.

As is known, over the past few years, the electric household appliance industry, and particularly the washing-machine industry, has successfully made increasing use of so-called "universal electric motors", which are typically mounted in the laundry drum drive of the machine.

Universal electric motors are typically controlled by an electronic control device designed to regulate current supply to the rotor/stator as a function of the required rotation speed and the torque requested by the laundry drum.

Some electronic control devices are chopper-circuit-architectured.

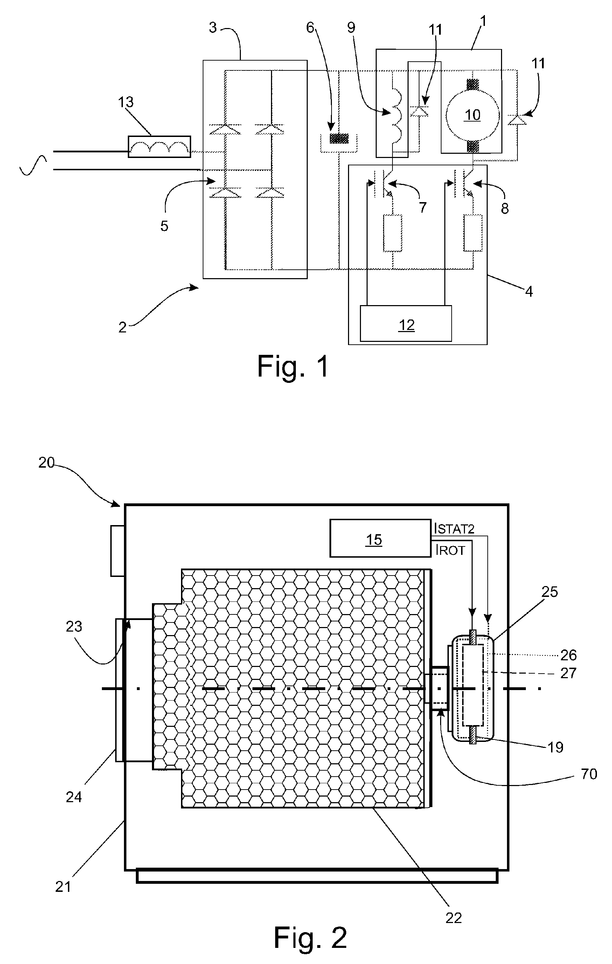

Figure 1 shows a schematic example of a universal electric motor 1 powered with direct current by an electronic control device 2 comprising a rectifying stage 3, and a chopper control stage 4 designed to chopper-regulate current supply to the stator and rotor windings of the motor.

More specifically, rectifying stage 3 comprises a rectifying bridge 5 having two inputs connected respectively over a first and second line to a power source to receive an alternating input supply voltage, and two outputs supplying a partly rectified output voltage.

Electronic control device 2 also comprises an electrolytic capacitor 6 connected between the outputs of rectifying bridge 5 to filter the output voltage. And chopper control stage 4 comprises two supply lines connected to the two outputs of rectifying bridge 5 and to capacitor 6; two electronic switches 7, 8 opened/closed by a control signal and connected in series with stator and rotor windings 9, 10 respectively; two diodes 11 connected parallel with stator and rotor windings 9, 10 respectively; and a chopper controller 12 designed to regulate the duty cycle of the PWM control signal as a function of required rotation speed.

As is known, electrolytic capacitor 6 is normally designed to conveniently improve the performance of universal electric motor 1. That is, electrolytic capacitor 6 of electronic control device 2 provides for increasing the effective supply voltage to the universal electric motor stator and so producing greater mechanical torque than would be achieved without the capacitor for the same supply voltage and at the same rotation speed.

Though advantageous in terms of performance, electrolytic capacitor 6 produces current distortion, i.e. introduces harmonics into the input line, thus resulting in undesired electromagnetic noise, the electric characteristics of which may not always conform fully with electromagnetic compatibility standards.

To eliminate this drawback, it has been proposed to employ an inductor 13 along the first or second line, upstream from rectifying stage 3, to filter the harmonics introduced by capacitor 6.

Using inductor 13, however, increases both the size and manufacturing cost of control device 2.

It is an object of the present invention to provide an electric household appliance featuring a chopper-architectured electronic device designed to eliminate the above drawbacks.

According to the present invention, there is provided an electric household appliance as claimed in Claim 1 and preferably, though not necessarily, in any one of the Claims depending directly or indirectly on Claim 1.

A non-limiting embodiment of the present invention will be described by way of example with reference to the accompanying drawings, in which:

> Figure 1 shows a schematic of a known chopper-architectured electronic control device for controlling a universal electric motor;
> Figure 2 shows a schematic of an electric household appliance featuring a chopper-architectured electronic control device for controlling a universal electric motor and in accordance with the teachings of the present invention;
> Figure 3 shows a block diagram of the Figure 2 electronic control device;
> Figure 4 shows a block diagram of the chopper controller of the Figure 3 electronic control device.

Number 20 in Figure 2 indicates as a whole an electric household appliance - preferably, though not necessarily, a washing-machine - substantially comprising a casing 21; a laundry drum 22 mounted inside casing 21 and directly facing a laundry loading/unloading opening 23 in casing 21; and a door 24 fitted to casing 21 to move, e.g. rotate, between an open position and a closed position respectively opening and closing opening 23.

Appliance 1 also comprises a universal electric motor 25, i.e. a single-phase electric commutator motor with sliding brushes, which, being known, is not described in detail, except to state that it comprises a stator (not shown) with a casing housing a stator winding 26;

and a rotor (not shown), which comprises a drum mounted to rotate inside the stator and supporting a rotor winding 27, and is connected to laundry drum 22 by a known transmission member 70 to rotate laundry drum 22.

A direct drive transmission is shown in figure 2 as an example; however, as an alternative, the drive shaft of the laundry drum 22 can be connected to a pulley to be driven into rotation by means a belt in turn connected to the motor.

The rotor of universal electric motor 25 also comprises a commutator (not shown) fitted to the drum and connected electrically to rotor winding 27; and at least two brushes 19, which slide over the commutator to supply current to rotor winding 27 as the rotor rotates.

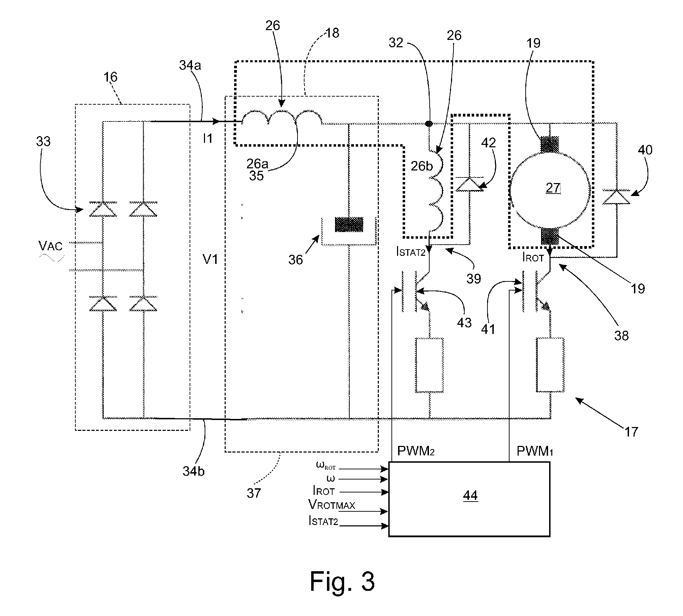

With reference to Figures 2 and 3, appliance 1 also comprises a control device 15 for controlling motor 25, and which substantially comprises a rectifying stage 16; a chopper regulating stage 17 designed to regulate current supply to the rotor winding and stator winding as a function of required rotation speed; and a filter stage 18 connecting chopper regulating stage 17 to rectifying stage 16.

In the Figure 3 example, rectifying stage 16 comprises a rectifying bridge 33 having two input terminals connected respectively by a first and second line to a preferably, though not necessarily, alternating current source, and two output terminals 34a, 34b supplying a partly rectified voltage V1 and a current I1.

Filter stage 18 comprises an inductor 35, which has one terminal connected to output terminal 34a, and, unlike the filter system inductors of known chopper control devices, comprises a portion of stator winding 26.

More specifically, in the Figure 3 example, stator winding 26 comprises two winding portions 26a, 26b, wherein winding portion 26a corresponds to inductor 35 and is connected to the other winding portion 26b by an intermediate node 32.

More specifically, winding portion 26a corresponds to inductor 35, has N1 number of turns, and is traversed by the output current I1 from terminal 34a of rectifying bridge 33; and winding portion 26b has N2 number of turns, and is traversed by a stator current $I_{STAT2}$.

In connection with the above, it should be pointed out that winding portion 26a is designed to conveniently perform inductive filtering, and at the same time generates, together with winding portion 26b, the magnetic field to be induced in the rotor.

Filter stage 18 also comprises a capacitor 36 having a first terminal connected to intermediate node 32, and a second terminal connected by a supply branch 37 to terminal 34b.

Chopper regulating stage 17 comprises a first control branch 38 connected between supply branch 37 and intermediate node 32 to regulate a current $I_{ROT}$ supplied to rotor winding 27 by brushes 19 and the commutator; and a second control branch 39 connected between intermediate node 32 and supply branch 37 to regulate a current $I_{STAT2}$ supplied to stator winding portion 26b.

More specifically, with reference to Figure 3, one brush 19 of the rotor is connected to intermediate node 32, and first control branch 38 comprises a one-way electronic device, in particular a diode 40, connected parallel with brushes 19 of the rotor of motor 25; and an electronic switch 41, e.g. a transistor, with a first terminal connected to one brush 19 and to a terminal of the diode, a second terminal connected to supply branch 37, and a third or gate terminal which receives a control signal $PWM_1$ for opening/closing electronic switch 41.

Second control branch 39 comprises a one-way electronic device, in particular a diode 42, connected parallel with stator winding portion 26b; and an electronic switch 43, e.g. a transistor, with a first terminal connected to supply branch 37, a second terminal connected to a terminal of stator winding portion 26b, and a third or gate terminal which receives a control signal $PWM_2$ for opening/closing electronic switch 43.

Chopper regulating stage 17 also comprises a chopper controller 44, which receives a number of quantities, such as a speed $\omega_{ROT}$ corresponding to the required rotor rotation speed, the measured current $I_{ROT}$ through the rotor, and the measured current $I_{STAT2}$ through stator winding portion 26b, and is designed to chopper-regulate currents $I_{ROT}$ and $I_{STAT2}$ as a function of said quantities.

More specifically, chopper controller 44 is designed to regulate the duty cycle of control signals $PWM_1$ and $PWM_2$ opening/closing switches 41 and 43, to bring the motor to the required speed $\omega_{ROT}$.

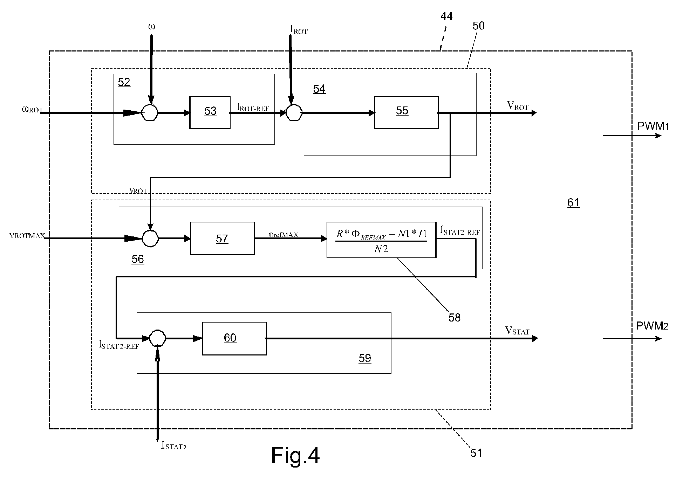

With reference to Figure 4, chopper controller 44 substantially comprises a first and second regulating stage 50, 51 designed to respectively determine the voltage $V_{ROT}$ to be supplied to rotor winding 27 and the voltage $V_{STAT2}$ to be supplied to stator winding portion 26b for the rotor to rotate at the required speed $\omega_{ROT}$.

More specifically, first regulating stage 50 comprises an external control loop 52, which receives the required rotor speed $\omega_{ROT}$ and the speed $\omega$ measured on the rotor, e.g. by means of a speed sensor (not shown) on the rotor, and supplies a reference rotor current $I_{ROT-REF}$.

More specifically, external control loop 52 comprises a PI (proportional-integral) regulating module 53, which varies the reference rotor current $I_{ROT-REF}$ in proportion with the difference between the speed $\omega$ measured on the rotor and the required rotor speed $\omega_{ROT}$.

First regulating stage 50 also comprises an internal control loop 54, which receives reference rotor current $I_{ROT-REF}$ and the current $I_{ROT}$ supplied to rotor winding 27, and supplies the voltage $V_{ROT}$ to be supplied to rotor winding 27.

More specifically, internal control loop 54 comprises a PI (proportional-integral) regulating module 55, which varies the rotor voltage $V_{ROT}$ in proportion with the difference between current $I_{ROT}$ and reference rotor current $I_{ROT-REF}$.

Second regulating stage 51 comprises a first control loop 56, which receives the voltage supply to the rotor $V_{ROT}$ determined by first regulating stage 51, and a maximum reference rotor voltage $V_{ROTMAX}$, and supplies the current $I_{STAT2}$ to be supplied to second stator winding portion 26b.

In connection with the above, it should be pointed out that the maximum reference rotor voltage $V_{ROTMAX}$ is predetermined on the basis of the maximum voltage that can be supplied to rotor winding 27.

More specifically, first control loop 56 comprises a PI (proportional-integral) regulating module 57, which varies the value of a reference stator flux $\Phi_{refMAX}$ in proportion with the difference between voltage $V_{ROT}$ and reference voltage $V_{ROTMAX}$.

First control loop 56 also comprises a computing module 58, which receives the value of reference stator flux $\Phi_{refMAX}$, and supplies a reference current $I_{STAT2-REF}$ to be supplied to second stator winding portion 26b.

More specifically, computing module 58 determines reference current $I_{STAT2-REF}$ according to the equation :

$$I_{STAT2-REF} = \frac{\Re\Phi_{refMAX} - N1*I1}{N2}$$

where $\Re$ is the reluctance of the magnetic motor circuit.

Second regulating stage 51 also comprises a second control loop 59, which receives reference current $I_{STAT2-REF}$ to be supplied to second stator winding portion 26b, and the current $I_{STAT2}$ measured on second stator winding portion 26b, and supplies the voltage $V_{STAT}$ to be supplied to second stator winding portion 26b.

More specifically, second control loop 59 comprises a PI (proportional-integral) module 60, which varies the value of voltage $V_{STAT}$ in proportion with the difference between reference current $I_{STAT2-REF}$ and current $I_{STAT2}$.

Finally, chopper controller 44 comprises a PWM module 61, which receives voltages $V_{ROT}$ and $V_{STAT}$, and accordingly generates control signals $PWM_1$ and $PWM_2$ for opening/closing electronic switches 41 and 43 respectively.

Control device 15 for controlling universal electric motor 25 of appliance 1 has the major advantage of employing a portion of the stator winding to perform the filtering function involved in chopper-regulating the motor, thus reducing both circuit bulk and manufacturing cost.

Clearly, changes may be made to the electric household appliance and the control device as described herein without, however, departing from the scope of the present invention as defined in the accompanying Claims.

**Claims**

1. An electric household appliance (20) comprising a universal electric motor (25), and an electronic control device (15) for regulating the rotor current ($I_{ROT}$) and stator current ($I_{STAT2}$) to be supplied to the rotor winding and stator winding of said motor (25), as a function of a required rotor rotation speed ($\omega_{ROT}$); said electronic control device (15) comprising a filtering stage (18) having at least one inductor (35) and at least one capacitor (36), and a chopper regulating stage (17) which is connectable by said filtering stage (18) to a supply source, and is designed to chopper-regulate said rotor current ($I_{ROT}$) and said stator current ($I_{STAT2}$) of said motor (25) as a function of the required rotor rotation speed ($\omega_{ROT}$); said electric household appliance (20) being **characterized in that** said inductor (35) of said filtering stage (18) comprises a first stator winding portion (26a).

2. An electric household appliance as claimed in Claim 1, wherein said chopper regulating stage (17) chopper-regulates the current ($I_{STAT2}$) flowing through a second stator winding portion (26b); said first (26a) and said second (26b) stator winding portion together forming said stator winding (26).

3. An electric household appliance as claimed in Claim 2, wherein said chopper regulating stage (17) comprises a first electronic switch (41) opened/closed by a first control signal ($PWM_1$) to regulate current supply to said second stator winding portion (26b); a second electronic switch (43) opened/closed by a second control signal ($PWM_2$) to regulate current supply ($I_{ROT}$) to the rotor winding (27); and a chopper controller (44) configured to generate said first ($PWM_1$) and said second ($PWM_2$) control signal as a function of said required rotor rotation speed ($\omega_{ROT}$).

4. An electric household appliance as claimed in Claim 3, wherein said chopper controller (44) comprises a first regulating stage (50), which is designed to calculate the supply voltage ($V_{ROT}$) to the rotor winding (27) as a function of the difference between the required rotor rotation speed ($\omega_{ROT}$) and the measured rotor speed ($\omega$), and generates said first control signal ($PWM_1$) as a function of the calculated said voltage ($V_{ROT}$).

5. An electric household appliance as claimed in Claim 4, wherein said first regulating stage (50) comprises a proportional-integral external control loop (52) designed to vary a reference rotor current ($I_{ROT-REF}$) in proportion with the difference between the measured

rotor speed ($\omega$) and said required rotor rotation speed ($\omega_{ROT}$).

6. An electric household appliance as claimed in Claim 5, wherein said first regulating stage (50) comprises a proportional-integral internal control loop (54) designed to vary the voltage ($V_{ROT}$) to be supplied to the rotor, in proportion with the difference between the current ($I_{ROT}$) measured on the rotor winding (27) and the calculated said reference rotor current ($I_{ROT-REF}$).

7. An electric household appliance as claimed in any one of Claims 3 to 6, wherein said chopper controller (44) comprises a second regulating stage (51), which is designed to calculate the supply current ($I_{STAT2}$) to said second portion (26b) of the stator winding (26) as a function of the difference between said rotor voltage ($V_{ROT}$) calculated by said first regulating stage (50), and a maximum reference rotor voltage ($V_{ROTMAX}$), and generates said second control signal ($PWM_2$) as a function of the calculated said supply current ($I_{STAT2}$).

8. An electric household appliance as claimed in Claim 7, wherein said second regulating stage (51) comprises a first control loop (56) comprising a proportional-integral regulating module (57) designed to vary the value of a reference stator flux ($\Phi_{refMAX}$) in proportion with the difference between said rotor voltage ($V_{ROT}$) calculated by said first regulating stage (50), and a maximum reference rotor voltage ($V_{ROTMAX}$).

9. An electric household appliance as claimed in Claim 8, wherein said first control loop (56) comprises a computing module (58), which receives the value of said reference stator flux ($\Phi_{refMAX}$) and supplies a reference current ($I_{STAT2-REF}$) to be supplied to said second stator winding portion (26b).

10. An electric household appliance as claimed in Claim 9, wherein said computing module (58) determines said reference current ($I_{STAT2-REF}$) according to the following equation:

$$I_{STAT2-REF} = \frac{\Re\Phi_{refMAX} - N1 * I1}{N2}$$

where $\Re$ is the reluctance of the magnetic motor circuit.

11. An electric household appliance as claimed in Claim 10, wherein the second regulating stage (51) comprises a second control loop (59), which receives said reference current ($I_{STAT2-REF}$) to be supplied to the second stator winding portion (26b), and the current ($I_{STAT2}$) measured on the second stator winding portion (26b), and supplies the voltage ($V_{STAT}$) to the supplied to the second stator winding portion (26b).

Fig. 1

Fig. 2

Fig. 3

Fig.4

EUROPEAN SEARCH REPORT

Application Number

EP 09 17 4955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 898 361 A1 (MOULINEX SA [FR]) 24 February 1999 (1999-02-24) | 1-7 | INV. H02K11/02 |
| A | * paragraphs [0002], [0015], [0031], [0038], [0040]; figures 1-7 * | 8-11 | |
| Y | US 6 163 122 A (DE FILIPPIS PIETRO [IT]) 19 December 2000 (2000-12-19) * column 1, lines 42-51; figures 1-14 * * column 2, lines 49-54 * * column 3, lines 5-7 * | 1-7 | |
| Y | US 2005/194920 A1 (HERRADA JOSE [FR] ET AL) 8 September 2005 (2005-09-08) * figure 3 * | 1-7 | |
| A | US 6 313 557 B1 (DE FILIPPIS PIETRO [IT] ET AL) 6 November 2001 (2001-11-06) * figure 1 * | 1-11 | |

| | | | TECHNICAL FIELDS SEARCHED (IPC) |
|---|---|---|---|
| | | | H02P H02K |

The present search report has been drawn up for all claims

| Place of search | Date of completion of the search | Examiner |
|---|---|---|
| Munich | 4 June 2010 | Kanelis, Konstantin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT**
**ON EUROPEAN PATENT APPLICATION NO.**                    EP 09 17 4955

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2010

| Patent document cited in search report | | Publication date | Patent family member(s) | | Publication date |
|---|---|---|---|---|---|
| EP 0898361 | A1 | 24-02-1999 | FR | 2767428 A1 | 19-02-1999 |
| US 6163122 | A | 19-12-2000 | AT | 259553 T | 15-02-2004 |
| | | | BR | 9707815 A | 27-07-1999 |
| | | | CA | 2247832 A1 | 04-09-1997 |
| | | | CN | 1207217 A | 03-02-1999 |
| | | | DE | 69727553 D1 | 18-03-2004 |
| | | | DE | 69727553 T2 | 30-12-2004 |
| | | | WO | 9732390 A1 | 04-09-1997 |
| | | | EP | 0883926 A1 | 16-12-1998 |
| | | | ES | 2216127 T3 | 16-10-2004 |
| | | | IT | T0960148 A1 | 01-09-1997 |
| | | | JP | 3889445 B2 | 07-03-2007 |
| | | | JP | 2000505640 T | 09-05-2000 |
| | | | PL | 328636 A1 | 15-02-1999 |
| | | | TR | 9801689 T2 | 21-12-1998 |
| US 2005194920 | A1 | 08-09-2005 | EP | 1580877 A2 | 28-09-2005 |
| | | | FR | 2867322 A1 | 09-09-2005 |
| US 6313557 | B1 | 06-11-2001 | BR | 9911039 A | 23-04-2002 |
| | | | CA | 2298604 A1 | 02-12-1999 |
| | | | WO | 9962165 A1 | 02-12-1999 |
| | | | EP | 1000454 A1 | 17-05-2000 |
| | | | IT | T0980457 A1 | 29-11-1999 |
| | | | PL | 338293 A1 | 23-10-2000 |
| | | | TR | 200000252 T1 | 23-10-2000 |

EPO FORM P0459

For more details about this annex : see Official Journal of the European Patent Office, No. 12/82